# EUROPÄISCHE PATENTSCHRIFT

(11) **EP 1 071 586 B1**
(45) Veröffentlichungstag und Bekanntmachung des Hinweises auf die Patenterteilung: **12.06.2002**
(21) Anmeldenummer: 99920608.9
(22) Anmeldetag: 08.04.1999
(51) Int. Cl.: B60R 22/46

(54) **SICHERHEITSGURTANORDNUNG FÜR KRAFTFAHRZEUGE**
SAFETY BELT ARRANGEMENT FOR MOTOR VEHICLES
SYSTEME DE CEINTURE DE SECURITE POUR AUTOMOBILES

(30) Priorität: 11.04.1998 DE 19816277
(43) Veröffentlichungstag der Anmeldung: 31.01.2001
(73) Patentinhaber: AUDI AG, 85045 Ingolstadt (DE)
(72) Erfinder: VOLLMER, Elmar, D-83236 Feldwies (DE)
(74) Vertreter: Engelhardt, Harald
(86) Internationale Anmeldenummer: EP9902363
(87) Internationale Veröffentlichungsnummer: WO9952747

(56) Entgegenhaltungen:
- DE-A- 3 343 325
- DE-A- 19 522 684
- DE-U- 29 702 125
- US-A- 3 982 775
- US-A- 5 407 148
- US-A- 5 492 368

## Beschreibung

Die Erfindung betrifft eine Sicherheitsgurtanordnung für Kraftfahrzeuge gemäß dem Oberbegriff des Anspruchs 1.

Sicherheitsgurte für Kraftfahrzeuge sind schon seit langem bekannt. Sie dienen im Falle eines Unfalls dazu, Fahrzeuginsassen im Fahrzeugsitz zurückzuhalten und damit vor unkontrollierbaren Bewegungen im Fahrzeuginnenraum zu schützen. Dadurch wird das Verletzungsrisiko der Fahrzeuginsassen erheblich verringert.
Bei einem Frontalaufprall treten bekanntermaßen starke Fahrzeugverzögerungen auf. Da der angeschnallte Fahrzeuginsasse nicht starr mit dem Fahrzeug bzw. dem Fahrzeugsitz verbunden ist, ergibt sich ein gewisser Zeitverzug zwischen Fahrzeugverzögerung und Insassenverzögerung. Je größer dieser Zeitverzug ist, desto größer wird die Belastung des Fahrzeuginsassen. Dieser Zeitverzug wird im wesentlichen durch lose Gurtlängen bestimmt.
Es sind verschiedene Sicherheitsgurtanordnungen bekannt, die elektronisch ansteuerbare Gurtstraffervorrichtungen zur Vermeidung loser Gurtlängen aufweisen. Bei solchen Vorrichtungen wird die Unfallstärke mit Hilfe von Sensoren erfaßt und in einem Steuergerät ausgewertet. Ab einer gewissen Unfallstärke wird unmittelbar nach dem Unfallbeginn die Gurtstraffervorrichtung vom Steuergerät entsprechend betätigt. Dadurch ist der Fahrzeuginsasse wenige Millisekunden nach dem Unfallbeginn bereits fest am Fahrzeugsitz fixiert. Die Gefahr eines Durchtauchens unter dem Beckengurtabschnitt des Sicherheitsgurtes und eines Kopfaufschlages, z. B. gegen das Lenkrad, wird damit ebenfalls verringert. Je schneller und besser der Fahrzeuginsasse am Fahrzeugsitz fixiert ist, desto geringer ist sein Verletzungsrisiko. Diese Bemerkungen gelten in gleicher Weise auch für einen Unfall mit Seitenaufprall.

Normalerweise ist ein Sicherheitsgurt an drei Fixierpunkten an der Fahrzeugkarosserie festgelegt. In der Regel bleibt die Lage dieser Fixierpunkte bei einem Frontal- oder Heckaufprall während des gesamten Unfallablaufs erhalten, außer es treten Beschädigungen an der Fahrzeugkarosserie im Bereich der B-Säulen auf.
Hauptsächlich beim Seitenaufprall durch ein weiteres Kraftfahrzeug oder bei einem Überschlag besteht die Gefahr, daß die B-Säule der Fahrzeugkarosserie während des Unfallgeschehens beschädigt wird. Häufig erfolgt dabei ein Einknicken der B-Säule, die sich dadurch relativ zum übrigen Fahrzeug verschiebt. Mit dieser Verschiebung erfolgt gleichzeitig eine Änderung der relativen Lage der Fixierpunkte des Sicherheitsgurtes zueinander, mit der Folge erneut auftretender loser Gurtlängen. Da die Wirkung einer Gurtstraffervorrichtung nur von relativ kurzer Dauer ist und die Betätigung meist unmittelbar zu Beginn eines Unfalls erfolgt, können somit während des Unfallablaufs erneut lose Gurtlängen auftreten. Der Fahrzeuginsasse ist dann durch diese erneuten losen Gurtlängen nicht mehr fest am Fahrzeugsitz fixiert mit der bereits beschriebenen Folge, daß das Verletzungsrisiko erheblich ansteigt

Aus der gatlungsbildenden DE 195 22 684 A1 ist eine Vorrichtung zur Vermeidung von losen Gurtlängen bekannt, bei der der Schultergurtabschnitt des Sicherheitsgurts durch eine im Fahrzeugsitz integrierte Führung geführt wird. Diese Führung umfaßt eine Klemmeinrichtung, die bei einem Unfall betätigbar ist und dadurch den Schultergurt am Fahrzeugsitz fixiert. Während des Unfallgeschehens auftretende Verschiebungen des Fixierpunktes des Schultergurtes relativ zum Fahrzeugsitz führen bei dieser Vorrichtung nicht mehr zu losen Gurtlängen. Der Fahrzeuginsasse bleibt deshalb weiterhin fest am Sitz fixiert. Diese Vorrichtung erfordert jedoch aufwendige Änderungen des Fahrzeugsitzes, die sich auch optisch nachteilig auswirken. Eine Höhenverstellung des Schultergurtes ist ebenfalls nicht mehr möglich, da die Lage der Führung im Fahrzeugsitz fest vorgegeben ist.

Aus der Druckschrift DE 42 17 969 C2 ist eine Gurtstraffervorrichtung mit einem mehrstufigen Zündantrieb bekannt. Diese Gurtstraffervorrichtung erlaubt eine zeitlich verzögerte Betätigung mehrerer Sprengladungen hintereinander. Die zeitliche Verzögerung dient aber ausschließlich dazu, die Gurtkraft zu beschränken. Die zweite Betätigung ist nicht unabhängig von der ersten ausführbar, sondern erfolgt immer unmittelbar und zwangsweise nach der ersten Betätigung.

Aufgabe der vorliegenden Erfindung ist es, eine Sicherheitsgurtanordnung für Kraftfahrzeuge zu schaffen, die die oben genannten Nachteile nicht besitzt, die insbesondere während des Unfallverlaufs auftretende lose Gurtlängen vermeidet und die einfach und kostengünstig herstellbar ist.

Gelöst wird diese Aufgabe durch die im Anspruch 1 angegebenen Merkmale. Vorteilhafte Weiterentwicklungen der Erfindung sind in den Unteransprüchen angegeben.
Die wesentliche Idee der Erfindung besteht darin, eine Sicherheitsgurtanordnung so auszubilden, daß der Sicherheitsgurt durch die Betätigung einer Gurtstraffervorrichtung zweimal nacheinander gespannt werden kann. Die zweite Betätigung der Gurtstraffervorrichtung erfolgt nur bei einer relative Verschiebung der Fixierpunkte des Sicherheitsgurtes zueinander. Durch die zweite Betätigung der Gurtstraffervorrichtung werden lose Gurtlängen, die während des Unfallverlaufs auftreten können, verhindert.

Die relative Verschiebung der Fixierpunkte des Sicherheitsgurtes wird dabei in vorteilhafter Weise durch mindestens einen an der B-Säule der Fahrzeugkarosserie angeordneten Sensor erfaßt.

Um die Belastung eines Fahrzeuginsassen durch eine zweite Betätigung der Gurtstraffervorrichtung sicherheitshalber zu beschränken, ist ein Gurtkraftbegrenzer am Sicherheitsgurt vorgesehen, der die Gurtkraft auf einen maximalen Wert begrenzt.

Da bereits nur einmal betätigbare Gurtstraffervorrichtungen sehr kompliziert aufgebaut sind und dies in weit höherem Maße für zweifach betätigbare Gurtstraffervorrichtungen gilt, ist bei einem einfacheren Ausführungsbeispiel einer Sicherheitsgurtanordnung vorgesehen, die zweimal betätigbare Gurtstraffervorrichtung durch zwei getrennte Gurtstraffervorrichtungen herkömmlicher Bauart zu ersetzen.

Nachfolgend ist die Erfindung anhand einer Zeichnung näher erläutert. Es zeigen:
- Fig.1: schematische Darstellung einer erfindungsgemäßen Sicherheitsgurtanordnung gemäß einem ersten Ausführungsbeispiel im Fahrzeuginnenraum
- Fig. 2: schematische Darstellung einer Sicherheitsgurtanordnung gemäß einem zweiten Ausführungsbeispiel im Fahrzeuginnenraum

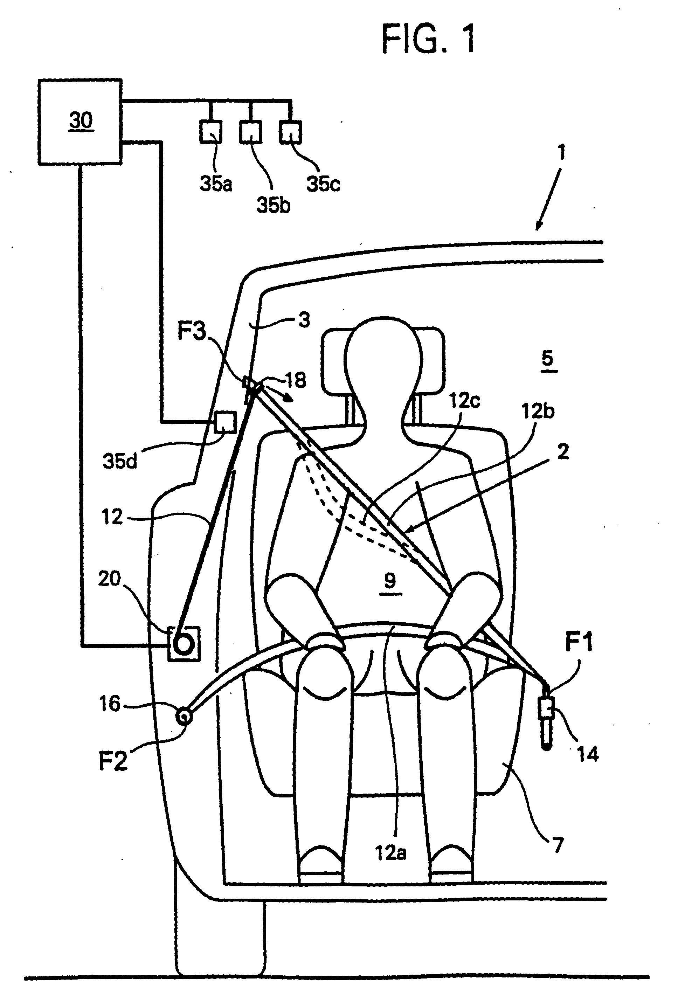

In Fig. 1 ist der Fahrzeuginnenraum 5 mit einer erfindungsgemäßen Sicherheitsgurtanordnung 2 in einem Kraftfahrzeuges 1 im Bereich eines Fahrzeugsitzes 7 schematisch dargestellt. Die Sicherheitsgurtanordnung 2 umfaßt einen herkömmlichen Sicherheitsgurt 12 mit einer Gurtstraffervorrichtung 20, die von einem Steuergerät 30, an das mehrere Sensoren 35 angeschlossen sind, ansteuerbar ist. Die Sensoren 35 dienen zur Aufnahme von unfallrelevanten Daten. Der im Bereich einer B-Säule 3 der Karosserie des Kraftfahrzeuges 1 angeordnete Sensor 35d dient zum Erkennen von etwaigen Verformungen der B-Säule 3 während des Unfallablaufs.

Ein Fahrzeuginsasse 9 wird mit Hilfe des Sicherheitsgurtes 12 am Fahrzeugsitz 7 gehalten. Der Sicherheitsgurt 12 ist an drei Punkten F1, F2 und F3 fahrieugseitig fixiert. Ein Gurtschloß 14 (Fixierpunkt F1) unterteilt den Sicherheitsgurt 12 in zwei Abschnitte einem Beckengurt 12 a und einem Schultergurt 12 b. Der Schultergurt 12 b verläuft vom Gurtschluß 14 über den Brustbereich des Fahrzeuginsassen 9 bis zur B-Säule 3, wo er mittels eines Umlenkbeschlags 18 (Fixierpunkt F3) umgelenkt wird. Verdeckt läuft der Schultergurt 12 b innerhalb der B-Säule 3 weiter zur Gurtstraffervorrichtung 20. Vom Gurtschloß 14 aus führt der Beckengurt 12 a über den Beckenbereich des Fahrzeuginsassen 9 zu einer Halterung 16 (Fixierpunkt F 2) in bzw. an der B-Säule 3. Gestrichelt dargestellt ist beispielhaft eine lose Gurtlänge 12c.

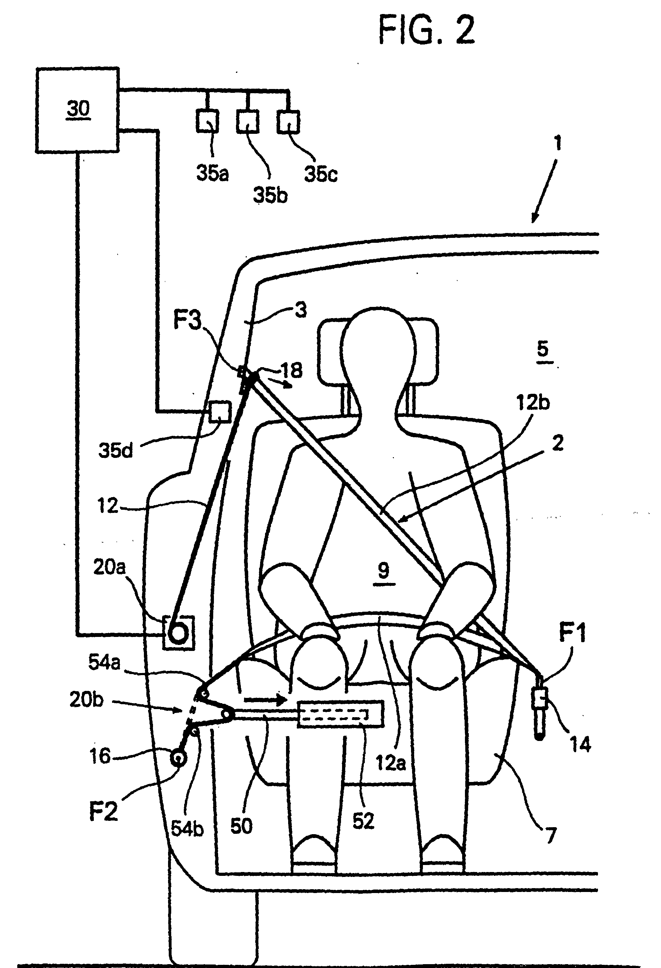

In Fig. 2 ist ein zweites Ausführungsbeispiel einer erfindungsgemäßen Gurtstraffervorrichtung dargestellt. Die Bezifferung entspricht im wesentlichen der in Fig. 1 gewählten. Im Unterschied zum ersten Ausführungsbeispiel ist jedoch anstatt der Gurtstraffervorrichtung 20 eine herkömmliche Gurtstraffervorrichtung 20a und eine weitere herkömmliche Gurtstraffervorrichtung 20b am Beckengurt 12a vorgesehen. Die Gurtstraffervorrichtung 20b kann z. B. aus einer Zugstange 50, die mittels einer Betätigungsvorrichtung 52 in Pfeilrichtung verschiebbar ist, bestehen.

Bei einer Betätigung der Gurtstraffervorrichtung 20b wird der Beckengurt 12a zwischen zwei Umlenkern 54a, 54b geführt und dabei der gesamte Sicherheitsgurt 12 gespannt bzw. aufgetretene lose Gurtlängen abgebaut.

Die Betätigungsvorrichtung 52 ist von außen nicht sichtbar im Fahrzeugsitz 7 integriert. Denkbar ist auch die Umlenker 54a, 54b nicht innerhalb der B-Säule 3, sondern am bzw. innerhalb des Fahrzeugsitzes 7 vorzusehen, um die gesamte Gurtstraffervorrichtung 20b so unauffällig wie möglich zu gestalten.

Die zweite Gurtstrafferrichtung 20b kann auch an einer anderen Stelle am Sicherheitsgurt 12 angeordnet sein. Denkbar ist z.B. eine Gurtstraffervorrichtung, die eine Verschiebung des Gurtschlusses 12 in Richtung Fahrzeugboden ermöglicht. Eine weitere Alternative ist eine herkömmliche Gurtstraffervorrichtung am Ende des Beckengurtes 12a oder eine weitere Gurtstraffervorrichtung, die auf den in der B-Säule 3 verlaufenden Gurtabschnitt des Sicherheitsgurtes 12 wirkt.

Nachfolgend ist die Funktionsweise der Erfindung näher erläutert.
Im Normalfall liegt der Sicherheitsgurt 12 unter leichter Spannung am Fahrzeuginsassen 9 an. Diese Spannung wird durch einen vorgespannten Gurtaufroller in der Gurtstraffervorrichtung 20 bzw. 20a erzeugt. Der Fahrzeuginsassen 9 kann sich relativ frei bewegen. Seine Bewegungsfreiheit wird durch diese leichte Gurtspannung nur geringfügig eingeschränkt.
Bei einem Unfall sprechen die Sensoren 35 a,b,c,d an. Die Sensorsignale dieser Sensoren 35 a,b,c,d werden dem Steuergerät 30 zugeführt und in diesem ausgewertet. Überschreiten diese Sensorsignale gewisse Schwellwerte, so wird die Gurtstraffervorrichtung 20 bzw. 20a vom Steuergerät 30 ausgelöst. In der Regel arbeiten Gurtstraffervorrichtungen pyroelektrisch.
Durch die erste Betätigung der Gurtstraffervorrichtung 20 bzw. 20a wird der Schultergurt 12 b und der Beckengurt 12 a gestrafft. Möglicherweise vorhandene lose Gurtlängen 12c werden beseitigt. Wenige Millisekunden nach dem Unfallbeginn ist der Fahrzeuginsasse 9 fest am Fahrzeugsitz 7 fixiert.

Beim Seitenaufprall bzw. bei einem Überschlag besteht nun die Möglichkeit, daß die B-Säule 3 nicht unmittelbar zu Unfallbeginn sondern später, nachdem die erste Wirkung der Gurtstraffervorrichtung 20 bzw. 20a bereits "verpufft" ist, beschädigt wird. Häufig wirkt sich eine solche Beschädigung in einem mehr oder weniger starken Einknicken der B-Säule 3 aus. Danach verschiebt sich der Fixierpunkt F 3 relativ zu den anderen Fixierpunkten F 2 und F 1 in Pfeilrichtung und der Längenabstand F 3, F 1 verkürzt sich. Dies hat die unerwünschte Folge, daß der vorher zu Beginn des Unfallablaufes gespannte Schultergurt 12 b erneut eine lose Gurtlänge 12 c aufweist. Erfindungsgemäß wird diese lose Gurtlänge 12c entweder durch eine zweite Betätigung der Gurtstraffervorrichtung 20 oder gemäß dem zweiten Ausführungsbeispiel durch Betätigung der Gurtstraffervorrichtung 20b beseitigt. Nach der Betätigung der Gurtstraffervorrichtung 20 bzw. 20b ist der Sicherheitsgurt 12 wieder ausreichend gespannt und der Fahrzeuginsasse 9 damit erneut fest am Fahrzeugsitz 7 fixiert. Das Verletzungsrisiko für den Fahrzeuginsassen 9 im Laufe des weiteren Unfallgeschehens wird dadurch verringert.

Da eine relative Verschiebung der Fixierpunkte F1, F2 und F3 im Prinzip nur durch eine Beschädigung im Bereich der B-Säule 3 erfolgen kann, ist erfindungsgemäß mindesten ein Sensor 35d in der B-Säule 3 angeordnet, der dessen Deformation direkt oder indirekt erfaßt. Neben der Verschiebung des Fixierpunktes F3 ist natürlich auch eine Verschiebung des Fixierpunktes F2 bei einem Seitenaufprall denkbar. Zur Erfassung einer solchen Verschiebung müßte ein weiterer Sensor vorgesehen werden.

Um eine Belastung des Fahrzeuginsassen 9 zu vermeiden, sollte eine zweite Betätigung der Gurtstraffervorrichtung 20 nur dann erfolgen, wenn auch tatsächlich eine lose Gurtlänge 12c vorliegt. Da eine lose Gurtlänge 12c nicht direkt meßbar ist, sondern aus den Daten der Sensoren 35 abgeschätzt werden kan, ist es sinnvoll einen nicht dargestellten Gurtstraffbegrenzer vorzusehen, der die Gurtkraft des Sicherheitsgurtes 12 auf einen Maximalwert begrenzt. Dadurch wird der Fahrzeuginsasse 9 vor einer Überbelastung geschützt, insbesondere dann, wenn eine zweite Betätigung erfolgt, ohne daß eine merkliche lose Gurtlänge 12c aufgetreten ist.

Bei einer losen Gurtlänge 12c nimmt allgemein die Spannkraft des Sicherheitsgurtes 12 ab. Durch einen nicht dargestellten Spannkraftsensor, der in Wirkverbindung mit dem Sicherheitsgurt 12 steht, lassen sich solche während des Unfallgeschehens auftretende Spannkraftabnahmen aufnehmen und im Steuergerät 30 verarbeiten. Unterschreitet das Spannkraftsignal ein gewissen Grenzwert während des Unfallgeschehens, so erfolgt ebenfalls eine zweite Betätigung der Gurtstraffervorrichtung 20.

Bei dieser Ausgestaltung kann auf den Sensor 35d verzichtet werden, weil eine Wirkung (lose Gurtlänge) unabhängig von den Ursachen erkannt wird.

Die Erfindung ist nicht auf den Fahrer- bzw. Beifahrersitz beschränkt. Mit entsprechenden Sensoren ist auch eine Anordnung auf den weiteren Fahrzeugsitzen denkbar.

Bei der Verwendung zweier getrennter Gurtstraffervorrichtungen 20a, b ist die Funktionsweise entsprechend. Statt einer zweiten Betätigung der Gurtstraffervorrichtung 20 erfolgt nach einer ersten Betätigung der Gurtstraffervorrichtung 20a eine Betätigung der Gurtstraffervorrichtung 20b durch das Steuergerät 30.

Mit der vorgeschlagenen Sicherheitsgurtanordnung 2 lassen sich lose Gurtlängen 12c, die noch während eines Unfallablaufs auftreten können, abbauen. Dadurch verringert sich das Verletzungsrisiko des Fahrzeuginsassen 9 beim weiteren Unfallgeschehen.

## Patentansprüche

1. Sicherheitsgurtanordnung (2) für Kraftfahrzeuge (1) umfassend einen Sicherheitsgurt (12), der über Fixierpunkte (F) an der Fahrzeugkarosserie festgelegt ist, mit einer ersten Gurtstraffervorrichtung (20), die mittels eines Steuergerätes (30) betätigbar ist, **dadurch gekennzeichnet, daß** die Gurtstraffervorrichtung (20) zweimal nacheinander betätigbar ist, wobei die zweite Betätigung nur bei einer relativen Lageänderung der Fixierpunkte (F) zueinander erfolgt.

2. Sicherheitsgurtanordnung (2) für Kraftfahrzeuge (1) umfassend einen Sicherheitsgurt (12), der über Fixierpunkte (F) an der Fahrzeugkarosserie festgelegt ist, mit einer ersten Gurtstraffervorrichtung (20), die mittels eines Steuergerätes (30) betätigbar ist, **dadurch gekennzeichnet, daß** zusätzlich zur ersten Gurtstraffervorrichtung (20a) eine zweite Gurtstraffervorrichtung (20b) vorgesehen ist, wobei die Betätigung der zweiten Gurtstraffervorrichtung (20b) nur bei einer relativen Lageänderung der Fixierpunkte zueinander erfolgt.

3. Sicherheitsgurtanordnung nach einem der vorhergehenden Ansprüche, **dadurch gekennzeichnet, daß** das Steuergerät (30) mit einem Deformationssensor (35) verbunden ist, der an der B-Säule (3) einer Kraftfahrzeugkarosserie angeordnet ist.

4. Sicherheitsgurtanordnung nach einem der vorhergehenden Ansprüche, **dadurch gekennzeichnet, daß** ein Gurtkraftbegrenzer am Sicherheitsgurt (12) vorgesehen ist.

5. Sicherheitsgurtanordnung nach einem der vorhergehenden Ansprüche, **dadurch gekennzeichnet, daß** ein Spannkraftsensor, der in Wirkverbindung mit dem Sicherheitsgurt (12) steht, vorgesehen ist.

## Claims

1. Safety belt arrangement (2) for motor vehicles (1) comprising a safety belt (12) secured to the vehicle body via anchorage points (F) and having a first seat belt tightener (20) which can be actuated by means of a control device (30), **characterised in that** the seat belt tightener (20) can be activated twice in succession, the second actuation taking place only in the event of a change in the relative position of the anchorage points (F) with respect to each other.

2. Safety belt arrangement (2) for motor vehicles (1) comprising a safety belt (12) secured to the vehicle body via anchorage points (F) and having a first seat belt tightener (20) which can be actuated by means of a control device (30), **characterised in that** a second seat belt tightener (20b) is provided in addition to the first seat belt tightener (20a), actuation of the second seat belt tightener (20b) taking place only in the event of a change in the relative position of the anchorage points with respect to each other.

3. Safety belt arrangement according to one of the preceding claims, **characterised in that** the control device (30) is connected to a deformation sensor (35) which is arranged on the B-post (3) of a motor vehicle body.

4. Safety belt arrangement according to one of the preceding claims, **characterised in that** the safety belt (12) is provided with a seat belt force limiter.

5. Safety belt arrangement according to one of the preceding claims, **characterised in that** a tension force sensor is provided which is operatively connected to the safety belt (12).

## Revendications

1. Système de ceinture de sécurité (2) pour véhicules automobiles (1) comprenant une ceinture de sécurité (12) fixée sur la carrosserie de véhicule, par l'intermédiaire de points de fixation (F), avec un premier dispositif tendeur de ceinture (20), susceptible d'être actionné à l'aide d'un appareil de commande (30), **caractérisé en ce que** le dispositif tendeur de ceinture (20) est actionnable à deux reprises successives, le deuxième actionnement ne s'effectuant qu'en cas de modification de position relative des points de fixation (F) l'un par rapport à l'autre.

2. Système de ceinture de sécurité (2) pour véhicules automobiles (1) comprenant une ceinture de sécurité (12), fixée sur la carrosserie de véhicule par l'intermédiaire de points de fixation (F), avec un premier dispositif tendeur de ceinture (20), susceptible d'être actionné à l'aide d'un appareil de commande (30), **caractérisé en ce qu'**en plus du premier dispositif tendeur de ceinture (20a) est prévu un deuxième dispositif tendeur de ceinture (20b), l'actionnement du deuxième dispositif tendeur de ceinture (20b) ne s'effectuant qu'en cas de modification de position relative des points de fixation les uns par rapport aux autres.

3. Système de ceinture de sécurité selon l'une des revendications précédentes, **caractérisé en ce que** l'appareil de commande (30) est relié à un capteur de déformation (35) disposé sur la colonne-B (3) d'une carrosserie de véhicule automobile.

4. Système de ceinture de sécurité selon l'une des revendications précédentes, **caractérisé en ce qu'**un limiteur de force de ceinture est prévu sur la ceinture de sécurité (12).

5. Système de ceinture de sécurité selon l'une des revendications précédentes, **caractérisé en ce qu'**est prévu un capteur de force de mise sous tension, relié fonctionnellement à la ceinture de sécurité (12).
